# EUROPÄISCHE PATENTANMELDUNG

(11) **EP 4 575 114 A1**
(43) Veröffentlichungstag der Anmeldung: **25.06.2025**
(21) Anmeldenummer: 23219740.0
(22) Anmeldetag: 22.12.2023
(51) Int. Cl.: E04B 1/68, E04B 1/94, E06B 1/62

(54) **FUGENDICHTUNGSBAND**

(71) Anmelder: Hanno-Werk GmbH & Co. KG, 30880 Laatzen (DE)
(72) Erfinder: Hohlfeld, Andreas, 31832 Springe (DE); Koplin, Tobias, 30163 Hannover (DE)
(74) Vertreter: Patentanwälte Thömen & Körner

(57) **Zusammenfassung**

Die Erfindung betrifft einen ein Fugendichtungsband, das einen solchen Schaumstoff aufweist.

## Beschreibung

Die Erfindung betrifft ein Fugendichtungsband umfassend einen Schaumstoff mit zwei Längsseiten sowie eine im Einbauzustand des Fugendichtungsbandes an die eine Fugenflanke angrenzende Oberseite und eine im Einbauzustand des Fugendichtungsbandes an die gegenüberliegende Fugenflanke angrenzende Unterseite.

Komprimierbare Fugendichtungsbänder, die einen Schaumstoff aufweisen, sind zum Abdichten insbesondere gegen Luftzug und Schlagregen beispielsweise aus der DE 19641415 C2, der DE 20009674 U1 oder der WO 2012/167762 A1 bekannt und werden in der Bautechnik zum Abdichten insbesondere von Bauteilen, beispielsweise von Fenster- und Türrahmen, gegenüber einem Mauerwerk, beispielsweise einer Gebäudewandöffnung, oder einer Bewegungsfuge in einer Fassade verwendet. Vorgenannte Fugendichtungsbänder weisen wenigstens eine Sperrschicht oder Membranschicht auf. Weitere Fugendichtungsbänder, die keine Sperrschicht oder Membranschicht aufweisen, sind beispielsweise aus der DE 1 000 946 A, DE 40 20 230 A1 oder der DE 34 07 995 A1 bekannt.

Ein bekanntes Fugendichtungsband, das einen Schaumstoff umfasst, weist zwei Längsseiten sowie eine im Einbauzustand des Fugendichtungsbandes an die eine Fugenflanke, insbesondere eines Mauerwerks, angrenzende Oberseite und eine im Einbauzustand des Fugendichtungsbandes an die gegenüberliegende Fugenflanke, insbesondere des Bauteils, angrenzende Unterseite auf. Zwischen der Oberseite und Unterseite, insbesondere parallel bzw. nahezu parallel zu den Längsseiten, können eine oder vorzugsweise mehrere Membranschichten jeweils in Längsrichtung verlaufen. Bekanntermaßen wird die Unterseite eines solchen Fugendichtungsbandes an dem abzudichtenden Bauteil, beispielsweise einem Fenster- und Türrahmen, angeklebt. Nach dem Einbau des Bauteils, beispielsweise in eine Gebäudewandöffnung, expandiert das zuvor komprimierte Fugendichtungsband, stellt sich also elastisch zurück, so dass die Oberseite des Fugendichtungsbandes am Mauerwerk der Gebäudewandöffnung angrenzt bzw. anliegt, und so das Bauteil am Mauerwerk der Gebäudewandöffnung abdichtet. Gattungsgemäße Fugendichtungsbänder werden zur Abdichtung auch in Fassadenfugen, insbesondere in Bestandsfugen, eingebracht.

Ausgehend von diesem Stand der Technik liegt der Erfindung die Aufgabe zugrunde, solche Fugendichtungsbänder, aber auch Bestandteile davon, insbesondere hinsichtlich des Brandschutzes zu verbessern, sowie ein verbessertes Verfahren zur Herstellung solcher Fugendichtungsbänder bereitzustellen.

Diese Aufgabe wird durch ein Fugendichtungsband mit den Merkmalen des Anspruchs 1 sowie durch ein Verfahren zur Herstellung zur Herstellung eines Fugendichtungsbandes mit den Merkmalen des Anspruchs 19 gelöst. Weiterbildungen und vorteilhafte Ausgestaltungen der Erfindung ergeben sich aus den jeweiligen Unteransprüchen.

Das erfindungsgemäße Fugendichtungsband umfasst einen Schaumstoff und weist zwei Außenseiten, nämlich zwei Längsseiten, sowie eine im Einbauzustand des Fugendichtungsbandes an die eine Fugenflanke angrenzende Außenseite, nämlich eine Oberseite, und eine im Einbauzustand des Fugendichtungsbandes an die gegenüberliegende Fugenflanke angrenzende Außenseite, nämlich eine Unterseite, auf. Ein solchen Fugendichtungsband ist erfindungsgemäß dadurch gekennzeichnet, dass der Schaumstoff über einen vorgegebenen Bereich eine ein intumeszierendes Material aufweisende Brandschutzaußenschicht und/oder über einen vorgegebenen Bereich eine ein intumeszierendes Material aufweisende Brandschutzinnenschicht aufweist und/oder dass der Schaumstoff ein mit einem intumeszierenden Material geschäumter Schaumstoff ist.

Als intumeszierendes Material, das auch als Dämmschichtbildner bezeichnet werden kann, ist vorzugsweise Blähgraphit, das auch als expandierbares Graphit bezeichnet wird, einsetzbar. Blähgraphit setzt bei aufgrund eines Feuers auftretender Wärmeeinwirkung vorteilhaft Gase frei. Wenn der Schaumstoff des Fugendichtungsbandes verascht, bildet sich mit der Gasbildung ein geschäumter Aschekörper, welcher die Sauerstoffzufuhr und damit die Flammenausbreitung behindert. Der Aschekörper kann beispielsweise eine Schicht bilden.

Intumeszierendes Material reagiert allgemein auf Temperaturerhöhungen und schützt die mit dem Fugendichtungsband versehene Fuge im Brandfall vor einen Feuer- oder Rauchgasdurchtritt. Dabei schäumt das intumeszierende Material ab einer bestimmten Temperatur, üblicherweise bei Temperaturen zwischen 120°C und 200°C, auf, wodurch sich ein wärmedämmender isolierender Schaumkörper bildet, der vor der Einwirkung des Brandes schützt. Der Schaumkörper ist voluminös sowie kohlenstoffhaltig, isoliert darunter liegende Bauteile bzw. dessen Oberflächen und schützt dementsprechend vor einem unerwünschten Wärmeeintrag.

Es kann von Vorteil sein, wenn als intumeszierendes Material Blähgraphit einsetzbar ist. Der einsetzbare Blähgraphit kann aus einer Blähgraphitsorte oder aus einer Mischung von mehreren, vorzugsweise zwei Blähgraphitsorten bestehen.

Es kann vorteilhaft sein, wenn der Blähgraphit eine Aktivierungstemperatur von > 140 °C, bevorzugt von > 180 °C, besonders bevorzugt von > 180°C bis < 220°C aufweist.

Unter einer Aktivierungstemperatur, die auch als Onset-Temperatur, Expansionstemperatur oder Starttemperatur bezeichnet werden kann, wird eine Temperatur verstanden, bei welcher der Blähgraphit anfängt, sich auf ein Vielfaches seines ursprünglichen Volumens auszudehnen. Insbesondere kann die Starttemperatur wie in EP 1 323 670 A2 offenbart bestimmt werden.

Es kann vorteilhaft sein, wenn der Blähgraphit ein Ausdehnungsvolumen bei vorzugsweise 1000°C von > 50 cm³/g, vorzugsweise von > 100 cm³/g, besonders bevorzugt von > 200 cm³/g aufweist.

Zur Bestimmung des Ausdehnungsvolumens wird, wie insbesondere in WO 2009/043758 A1 offenbart, vorzugsweise ein Quarzbehälter auf 1000 °C in einem elektrischen Schmelzeofen erhitzt, 2 g des Blähgraphits schnell in den Quarzbehälter gegeben und dieser 10 sec. im Schmelzeofen belassen werden, um anschließend das resultierende Volumen zu bestimmen"

Es kann von Vorteil sein, wenn der Blähgraphit aus einer der folgenden Blähgraphitsorten oder aus einer Mischung von mehreren, vorzugsweise von zwei der folgenden Blähgraphitsorten besteht, nämlich
a) eine Blähgraphitsorte, bei der mindestens 50%, vorzugsweise mindestens 75% oder mindestens 90% der Partikel eine Partikelgröße von > 180 µm haben oder
b) eine Blähgraphitsorte, bei der mindestens 50%, vorzugsweise mindestens 75% oder mindestens 80 % der Partikel eine Partikelgröße von < 180 µm haben oder
c) eine Blähgraphitsorte, bei der mindestens 50%, vorzugsweise mindestens 75% oder mindestens 80 % der Partikel eine Partikelgröße von < 150 µm haben oder
d) eine Blähgraphitsorte, bei der mindestens 50%, vorzugsweise mindestens 75% oder mindestens 80 % der Partikel eine Partikelgröße von < 75 µm haben oder
e) eine Blähgraphitsorte, bei der mindestens 50%, vorzugsweise mindestens 70% oder mindestens 80 % der Partikel eine Partikelgröße von > 300 µm haben oder
f) eine Blähgraphitsorte, bei der mindestens 50%, vorzugsweise mindestens 70% oder mindestens 80 % der Partikel eine Partikelgröße von > 500 µm haben.

Es kann von Vorteil sein, wenn der Blähgraphit aus einer Mischung von mindestens zwei der folgenden Blähgraphitsorten besteht, nämlich
a) einer Blähgraphitsorte, bei der mindestens 50%, vorzugsweise mindestens 60% der Partikel eine Partikelgröße von > 180 µm haben oder
b) einer Blähgraphitsorte, bei der mindestens 50%, vorzugsweise mindestens 60% der Partikel eine Partikelgröße < 150 µm haben oder
c) einer Blähgraphitsorte, bei der mindestens 50%, vorzugsweise mindestens 60% der Partikel eine Partikelgröße von > 300 µm haben.

Als besonders geeignet haben sich die folgenden Blähgraphitsorten herausgestellt.

Es kann von Vorteil sein, wenn als Blähgraphit eine Blähgraphitsorte A mit folgenden Eigenschaften eingesetzt wird:
Partikelgröße: mindestens 75 % der Partikel haben eine Partikelgröße von > 180 µm
Aktivierungs- bzw. Starttemperatur: 180 - 220°C
Ausdehnungsvolumen bzw. Expansionsrate bei 1000 °C: mindestens 250 cm³/g

Es kann von Vorteil sein, wenn als Blähgraphit eine Blähgraphitsorte B mit folgenden Eigenschaften eingesetzt wird:
Partikelgröße: mindestens 80 % der Partikel haben eine Partikelgröße von < 150 µm
Aktivierungs- bzw. Starttemperatur: 180 - 220°C
Ausdehnungsvolumen bzw. Expansionsrate bei 1000 °C: mindestens 100 cm³/g

Es kann von Vorteil sein, wenn als Blähgraphit eine Blähgraphitsorte C mit folgenden Eigenschaften eingesetzt wird:
Partikelgröße: mindestens 70 % der Partikel haben eine Partikelgröße von > 300 µm
Aktivierungs- bzw. Starttemperatur: 180 - 220°C
Ausdehnungsvolumen bzw. Expansionsrate bei 1000 °C: mindestens 250 cm³/g

Es kann vorteilhaft sein, wenn als Blähgraphit eine Mischung der Blähgraphitsorten A und B vorzugsweise in einem Verhältnis von 2:1 bis 1:2 eingesetzt wird.

Es kann vorteilhaft sein, wenn als Blähgraphit eine Mischung der Blähgraphitsorten B und C in einem Verhältnis von 2:1 bis 1:2 eingesetzt wird.

Für gewisse Einsatzfälle kann von Vorteil sein, wenn als Blähgraphit eine Blähgraphitsorte D mit folgenden Eigenschaften eingesetzt wird:
Partikelgröße: etwa 85 % der Partikel haben eine Partikelgröße von < 75 µm
Aktivierungs- bzw. Starttemperatur: 190 - 210°C
Ausdehnungsvolumen bzw. Expansionsrate bei 1000 °C: mindestens 40 cm³/g

Für bestimmte Einsatzfälle kann von Vorteil sein, wenn als Blähgraphit eine Blähgraphitsorte E mit folgenden Eigenschaften eingesetzt wird:
Partikelgröße: mindestens 85 % der Partikel haben eine Partikelgröße von < 180 µm
Aktivierungs- bzw. Starttemperatur: 190 - 210°C
Ausdehnungsvolumen bzw. Expansionsrate bei 1000 °C: mindestens 100 cm³/g

Für einige Einsatzfälle kann von Vorteil sein, wenn als Blähgraphit eine Blähgraphitsorte F mit folgenden Eigenschaften eingesetzt wird:
Partikelgröße: mindestens 90 % der Partikel haben eine Partikelgröße von > 180 µm
Aktivierungs- bzw. Starttemperatur: 170 - 190°C
Ausdehnungsvolumen bzw. Expansionsrate bei 1000 °C: mindestens 320 cm³/g

Für andere Einsatzfälle kann von Vorteil sein, wenn als Blähgraphit eine Blähgraphitsorte G mit folgenden Eigenschaften eingesetzt wird:
Partikelgröße: mindestens 80 % der Partikel haben eine Partikelgröße von > 300 µm
Aktivierungs- bzw. Starttemperatur: 170 - 190°C
Ausdehnungsvolumen bzw. Expansionsrate bei 1000 °C: mindestens 360 cm³/g

Für wenige Einsatzfälle kann von Vorteil sein, wenn als Blähgraphit eine Blähgraphitsorte H mit folgenden Eigenschaften eingesetzt wird:
Partikelgröße: mindestens 90 % der Partikel haben eine Partikelgröße von > 500 µm
Aktivierungs- bzw. Starttemperatur: 130 - 150°C
Ausdehnungsvolumen bzw. Expansionsrate bei 1000 °C: mindestens 600 cm³/g

Für verschiedene Einsatzzwecke kann es vorteilhaft sein, mehrere, vorzugsweise zwei der vorgenannten Blähgraphitsorten zu mischen.

Die Partikelgröße wird durch Sieben bzw. Siebung bestimmt, um den Anteil der Partikel "kleiner als" bzw. "größer als" einer definierten Siebgröße (mesh) zu bestimmen. Die Partikelgröße entspricht hierbei also nicht zwingend der Siebgröße. Die Umrechnung von Mesh in Mikrometer erfolgt über dem Fachmann bekannte Tabellen.

Es kann von Vorteil sein, wenn das Mischungsverhältnis von zwei Blähgraphitsorten bei ≥1:9 bis ≤9:1 beträgt.

Es kann vorteilhaft sein, wenn sich der Blähgraphit aus 10 - 90 Gew.-% einer ersten Blähgraphitsorte und 10 - 90 Gew.-% einer zweiten Blähgraphitsorten zusammensetzt, wobei die Summe der beiden Blähgraphitsorten 100 Gew.-%, bezogen auf die Zusammensetzung, ergibt.

Es kann vorteilhaft sein, wenn sich der Blähgraphit aus 10 - 90 Gew.-% einer ersten Blähgraphitsorte, 10 - 90 Gew.-% einer zweiten Blähgraphitsorte und 10 - 90 Gew.-% einer dritten Blähgraphitsorte zusammensetzt, wobei die Summe der drei Blähgraphitsorten 100 Gew.-%, bezogen auf die Zusammensetzung, ergibt.

Unter einer Brandschutzaußenschicht wird eine Schicht verstanden, die auf einer oder mehr als einer Außenseite des Schaumstoffs angeordnet ist. Ein vorgegebener Bereich ist dahingehend zu verstehen, dass vorteilhaft auch nur ein Teil einer oder mehr als einer Außenseite des Schaumstoffs die Brandschutzaußenschicht aufweisen kann oder dass vorteilhaft auch eine oder mehr als eine Außenseite des Schaumstoffs komplett mit der Brandschutzaußenschicht versehen ist.

Unter einer Brandschutzinnenschicht wird eine Schicht verstanden, die im Schaumstoff angeordnet ist. Ein vorgegebener Bereich ist dahingehend zu verstehen, dass eine solche Brandschutzinnenschicht von einer Außenseite zur einer anderen Außenseite oder von einer Kante zu einer anderen Kante innerhalb des Schaumstoffs verläuft und den Schaumstoff dann quasi in Abschnitte unterteilt, oder dass eine solche Brandschutzinnenschicht eben nicht von einer Außenseite zu einer anderen Außenseite oder von einer Kante zu einer anderen Kante verläuft. Im zuletzt genannten Fall kann es also sein, dass die Brandschutzinnenschicht an keiner Außenseite oder Kante des Schaumstoffs endet, sondern frei innerhalb des Schaumstoffs angeordnet ist, oder dass die Brandschutzinnenschicht mit nur einem Ende an eine Außenseite oder Kante des Schaumstoffs oder mit beiden Enden an ein und dieselbe Außenseite oder Kante des Schaumstoffs angrenzt. Wenn die Brandschutzinnenschicht mit beiden Enden an eine und dieselbe Außenseite des Schaumstoffs angrenzt, wird der Schaumstoff quasi ebenfalls in Abschnitte unterteilt.

Als ein mit einem intumeszierenden Material geschäumter Schaumstoff ist vorzugsweise ein elastischer Polyurethanweichschaumstoff einsetzbar, der aus einem Schaumstoff-Reaktionsgemisch mit einem Polyol als eine Reaktionskomponente und einem Polyisocyanat als weitere Rektionskomponente sowie einem Anteil von Blähgraphit vorzugsweise in Plättchenform, welcher zumindest einer Reaktionskomponente zugemischt wurde, hergestellt ist. Das intumeszierende Material wird also bereits wenigstens einer Reaktionskomponente im Schäumprozess zugegeben.

Es kann vorteilhaft sein, wenn die Brandschutzaußenschicht auf der im Einbauzustand des Fugendichtungsbandes zum Außenraum weisenden Längsseite des Schaumstoffs und/oder auf der im Einbauzustand des Fugendichtungsbandes zum Innenraum weisenden Längsseite des Schaumstoffs und/oder auf der Oberseite des Schaumstoffs und/oder auf der Unterseite des Schaumstoffs angeordnet ist.

Es sind also verschiedene jeweils für sich erfindungsgemäße Kombinationen der Brandschutzaußenschicht möglich. Jede Kombination kann hierbei je nach Einsatzzweck oder Bemaßung des Fugendichtungsbandes vorteilhaft sein. Überwiegend vorteilhaft ist ein Variante, bei der die Brandschutzaußenschicht und/oder die Brandschutzinnenschicht im Einbauzustand des Fugendichtbandes näher am Außenraum als am Innenraum angeordnet ist.

Es kann vorteilhaft sein, wenn sich wenigstens eine Brandschutzinnenschicht parallel zu den Längsseiten innerhalb des Schaumstoffs erstreckt und/oder wenn sich wenigstens eine Brandschutzinnenschicht parallel zur Ober- und Unterseite innerhalb des Schaumstoffs erstreckt und/oder wenn sich wenigstens eine Brandschutzinnenschicht schräg zwischen Ober- und Unterseite innerhalb des Schaumstoffs erstreckt und/oder wenn sich wenigstens eine Brandschutzinnenschicht schräg zwischen den Längsseiten innerhalb des Schaumstoffs erstreckt.

Jede vorgenannte Anordnung oder Kombination kann für sich je nach Anwendung oder Bemaßung des Fugendichtungsbandes vorteilhaft sein.

Es kann vorteilhaft sein, wenn wenigstens eine Brandschutzinnenschicht zentral innerhalb des Schaumstoffs angeordnet ist und/oder wenn wenigstens eine Brandschutzinnenschicht dezentral innerhalb des Schaumstoffs angeordnet ist.

Jede vorgenannte Anordnung oder Kombination kann für sich je nach Verwendung oder Bemaßung des Fugendichtungsbandes vorteilhaft sein.

Es kann vorteilhaft sein, wenn sich wenigstens eine Brandschutzinnenschicht kurvig zwischen Ober- und Unterseite innerhalb des Schaumstoffs erstreckt und/oder wenn sich wenigstens eine Brandschutzinnenschicht kurvig zwischen den Längsseiten innerhalb des Schaumstoffs erstreckt.

Kurvige Brandschutzinnenschichten können vorteilhaft so gestaltet sein, dass sich im Brandfall mit der Gasbildung ein in eine bestimmte Richtung ausbreitender geschäumter Aschekörper bildet.

Es kann vorteilhaft sein, wenn die Brandschutzaußenschicht und/oder die Brandschutzinnenschicht eine Folie ist, in welcher das intumeszierende Material integriert ist, wobei die Folie vorzugsweise ein- oder beidseitig haftend ausgerüstet ist.

Geeignete Folien in Form von hybriden Foliensystemen, bei denen wenigstens eine Folie mit intumeszierendem Material beschichtet ist, oder in Form von Brandschutzfolien sind beispielsweise in der WO 2004/054800 A1 offenbart.

Die Folie selbst kann vorteilhaft auch aus einem intumeszierenden Material bestehen. Hierbei handelt es sich insbesondere um Graphitfolien aus Blähgraphit.

Solche Folien lassen sich beispielsweise mit Verfahren, wie sie in der EP 3 567 176 A1, EP 3 567 175 A1, EP 3 567 177 A1, EP 3 567 174 A1, EP 2 990 553 A1, EP 2 990 552 A1, EP 2 990 551 A1, EP 3 608 482 A1, EP 3 375 597 A2, EP 3 150 366 A1, EP 3 404 156 A1, EP 3 851 625 A1 oder EP 3 603 941 A1 offenbart sind, im oder am Schaumstoff anordnen. Dabei können die Folien vor einer Komprimierung des Fugendichtbandes aufgebracht werden und später zusammen mit dem Schaumstoff zu einer komprimierten Fugendichtbandrolle komprimiert werden.

Es kann vorteilhaft sein, wenn die das intumeszierende Material aufweisende Brandschutzaußenschicht und/oder die das intumeszierende Material aufweisende Brandschutzinnenschicht ein Bindemittel enthält.

Das Bindemittel mit dem intumeszierenden Material, vorzugsweise Blähgraphit, kann vorteilhaft die Konsistenz einer Paste aufweisen, mit welcher der Schaumstoff beschichtet wird. Hierzu sind dem Fachmann verschiedene Beschichtungsverfahren, beispielsweise mittels Rakel, bekannt. Eine solche Paste kann vorteilhaft auf eine Längsseite als Außenseite eines vorab komprimierten und zu einer Rolle aufgewickelten Fugendichtungsbandes aufgebracht, beispielsweise gestrichen, und anschließend getrocknet werden. Die dabei entstehende durchgehende, also keine Lücken aufweisende Schicht bricht beim Expandieren des Fugendichtungsbandes in der Fuge auf, so dass sich in der Brandschutzaußenschicht Lücken bilden, die aber die gewünschte Funktion des Brandschutzes nicht negativ beeinflussen.

Für gewisse Fugendichtungsbänder kann es aber auch vorteilhaft sein, eine Brandschutzaußenschicht und/oder einer Brandschutzinnenschicht als Bindemittel mit dem intumeszierenden Material vor der Komprimierung des Schaumstoffs aufzubringen und erst anschließend das Fugendichtungsband zu komprimieren und zu einer Rolle aufzuwickeln. Hierzu bieten sich beispielsweise vorgenannte Verfahren für die Fertigung einzelner Scheiben von Fugendichtungsbändern an. Bei einer Brandschutzinnenschicht kann vorteilhaft in einfacher Weise ein Heißschmelzkleber verwendet werden, der das intumeszierende Material enthält.

In Falle der Brandschutzaußenschicht und/oder der Brandschutzinnenschicht kann es vorteilhaft sein, wenn das intumeszierende Material, insbesondere mit Epoxid-, Alkyd-, Acryl-, Silikon- und/oder Silikon-Epoxid-Hybridharz als Bindemittelpolymer versehen ist.

Es kann vorteilhaft sein, wenn wenigstens eine Brandschutzaußenschicht in wenigstens eine Brandschutzinnenschicht übergeht.

Es kann vorteilhaft sein, wenn die Brandschutzaußenschicht und/oder die Brandschutzinnenschicht sich jeweils aus einer zusammenhängenden Fläche mit oder ohne Lücken und/oder aus mehreren nicht zusammenhängenden Flächen mit oder ohne Lücken zusammensetzt.

Ganz allgemein kann es vorteilhaft sein, wenn die Brandschutzaußenschicht als durchgehende, also keine Lücken aufweisende Brandschutzaußenschicht teilweise oder vorzugsweise vollständig auf zumindest einer Längsseite des vorab komprimierten und vorzugsweise vorab zu einer Rolle aufgewickelten Fugendichtungsbandes aufgebracht ist, derart, dass diese Brandschutzaußenschicht beim Expandieren des Fugendichtungsbandes in einer Fuge aufbricht, so dass sich in der zuvor lückenlos zusammenhängenden Fläche der Brandschutzaußenschicht schließlich im Einbauzustand des Fugendichtungsbandes Lücken gebildet haben.

Es kann von Vorteil sein, wenn der Anteil an Lücken an der insgesamt mit einer Brandschutzaußenschicht versehenen Fläche nach teilweiser oder vollständiger Expansion des Fugendichtungsbandes 10 bis 90 %, vorzugsweise 70 bis 80% beträgt.

Es kann vorteilhaft sein, wenn der Schaumstoff über einen vorgegebenen Bereich wenigstens eine feuchtvariable Membranaußenschicht und/oder über einen vorgegebenen Bereich wenigstens eine feuchtevariable Membraninnenschicht aufweist, wobei die Membranaußenschicht und/oder die Membraninnenschicht zumindest teilweise quer zu einer Wasserdampfdiffusionsrichtung angeordnet ist.

Geeignete feuchtevariablen Membranschichten sind dem Fachmann beispielsweise aus der EP 2 655 775 A1 bekannt.

Es kann vorteilhaft sein, wenn die Brandschutzaußenschicht derart beschaffen ist, dass diese auch die feuchtevariable Membranaußenschicht bildet, und/oder wenn die

Brandschutzinnenschicht derart beschaffen ist, dass diese auch die feuchtevariable Membraninnenschicht bildet. Bevorzugt sind allerdings Varianten, bei denen die feuchtevariablen Membranen keine Brandschutzfunktion übernehmen.

Es kann vorteilhaft sein, wenn der Schaumstoff mit einer Imprägniermasse imprägniert ist.

Verfahren zum Imprägnieren eines Schaumstoffs mit einer Imprägniermasse sind dem Fachmann bekannt. Üblicherweise dient die Imprägnierung dazu, das den Schaumstoff umfassende Fugendichtungsband mit einem verzögerten Rückstellverhalten auszubilden. Darüber hinaus kann das den Schaumstoff aufweisende Fugendichtungsband durch das Imprägnieren mit einer Imprägniermasse mit weiteren Funktionalitäten, insbesondere einer wasserabweisenden Wirkung, einer Luftdichtheit, einer Farbe oder einem UV-Schutz, ausgerüstet werden.

Es kann vorteilhaft sein, wenn die Imprägniermasse ein Bindemittel, vorzugsweise eine wässrige Dispersion auf Basis eines Acrylsäureesters, besonders bevorzugt eine wässrige Dispersion eines Polyacrylsäurebutylesters umfasst.

Für einige Anwendungen kann es auch vorteilhaft sein, wenn die Imprägniermasse ein Bindemittel auf Polyurethanbasis umfasst.

Für gewisse Anwendungen kann es auch vorteilhaft sein, wenn die Imprägniermasse ein Bindemittel auf Wachsbasis umfasst.

Für bestimmte Anwendungen kann es auch vorteilhaft sein, wenn die Imprägniermasse ein Bindemittel auf Bitumenbasis umfasst.

Durch das Imprägnieren wird das Raumgewicht des imprägnierten Schaumstoffs nach seiner Trocknung im Vergleich zu einem nicht imprägnierten Schaumstoff erhöht.

Üblicherweise wird der Schaumstoff mit einer Imprägniermasse getränkt, indem der Schaumstoff in die Imprägniermasse eingetaucht wird, so dass die Imprägniermasse, bevorzugt mit Hilfe von Tauch- oder Quetschwalzen, in die Poren des Schaumstoffs eindringt und diesen vollständig durchdringt. Die Imprägniermasse füllt also die Poren des Schaumstoffs aus. Vorzugsweise wird hierzu ein offenporiger Schaumstoff verwendet. Nach dem Imprägnieren wird der Schaumstoff mittels mindestens einer Walze, insbesondere mit einem Walzenpaar, gewalzt. Mittels der wenigstens einen Walze wird ein Teil der Imprägniermasse aus dem Schaumstoff bis zum gewünschten Imprägnierungsgrad aus- bzw. abgequetscht. Durch Variation des Walzendruckes kann der Imprägnierungsgrad, das heißt vorliegend insbesondere die Menge des vom Schaumstoff aufgenommenen intumeszierenden Materials, variiert werden. Anschließend wird der Schaumstoff getrocknet und geschnitten.

Es kann vorteilhaft sein, wenn die Imprägniermasse ein intumeszierendes Material enthält.

Bei der Imprägniermasse handelt es sich vorzugsweise um eine Lösung oder Dispersion mit dem intumeszierenden Material. Diese Lösung oder Dispersion kann zusätzlich zum intumeszierenden Material auch bekannte Füllstoffe und/oder Hilfsstoffe enthalten.

Wie bereits erwähnt kann es vorteilhaft sein, wenn der Schaumstoff zusätzlich zur Imprägnierung mit einer Brandschutzaußenschicht über einen vorgegebenen Bereich ein- oder mehrseitig beschichtet und/oder mit wenigstens einer Brandschutzinnenschicht über einen vorgegebenen Bereich versehenen ist.

Es ist auch möglich, den Schaumstoff unter Druck bzw. im Vakuum oder mit Hilfe einer Sprüheinrichtung zu imprägnieren bzw. zu beschichten.

Es kann auch vorteilhaft sein, wenn der Schaumstoff über einen vorgegebenen Bereich eine ein intumeszierendes Material aufweisende Imprägnierung aufweist. Das kann ein Bereich sein, der wenigstens eine Außenseite des Fugendichtungsbandes mitbildet oder an diese angrenzt und/oder es kann sich um einen Bereich handeln, der innerhalb des Schaumstoffs angeordnet ist. Mit anderen Worten kann die Imprägnierung so ausgeführt werden, dass sich quasi wenigstens eine Brandschutzaußenschicht und/oder wenigstens eine Brandschutzinnenschicht ausbilden.

Die Erfindung betrifft außerdem ein Verfahren zur Herstellung eines Fugendichtungsbandes, das einen Schaumstoff mit zwei Längsseiten sowie eine im Einbauzustand des Fugendichtungsbandes an die eine Fugenflanke angrenzende Oberseite und eine im Einbauzustand des Fugendichtungsbandes an die gegenüberliegende Fugenflanke angrenzende Unterseite umfasst, wobei der Schaumstoff über einen vorgegebenen Bereich mit einer ein intumeszierendes Material aufweisenden Brandschutzaußenschicht beschichtet wird, indem eine Paste, die ein Bindemittel und das intumeszierende Material, vorzugsweise Blähgraphit, enthält, wenigstens bereichsweise auf die eine und/oder andere Längsseite und/oder Oberseite und/oder Unterseite des nicht komprimierten oder des komprimierten Schaumstoffs aufgetragen und anschließend getrocknet wird.

Es kann vorteilhaft sein, wenn das intumeszierende Material im und auf dem Schaumstoff des Fugendichtungsbandes homogen verteilt ist. Es kann für einige Anwendungsfälle aber auch vorteilhaft sein, wenn das intumeszierende Material im und auf dem Schaumstoff, insbesondere über die Breite und/oder über die Höhe des Fugendichtungsbandes, inhomogen verteilt ist.

Es kann von Vorteil sein, wenn die eingesetzte Art und Menge des intumeszierenden Materials derart gewählt ist, dass das den Schaumstoff umfassende Fugendichtungsband in seinem angegebenen Anwendungsbereich wenigstens einer der gängigen Brandnormen für den Baubereich entspricht, beispielsweise DIN 4102-B1 und/oder DIN 4102-B2 und/oder DIN 4102-≥F30 und/oder EN13501 Klasse E bis B und/oder EN 13501>R30 bzw. >EI30.

Es kann von Vorteil sein, wenn die eingesetzte Art und Menge des intumeszierenden Materials derart gewählt ist, dass es zu einer Erhöhung der Brandschutzeinstufung wenigstens einer der gängigen Brandnormen für den Baubereich kommt. So kann es insbesondere von Vorteil sein, wenn beispielsweise ein Fugendichtband mit Baustoffklasse B2 nach DIN 4102-1 oder Klasse E DIN EN 13501-1 durch die intumenszierende Schicht die Anforderungen einer der höheren Baustoffklassen B1 nach DIN 4102-1 oder D bis B nach EN 13501-1 erfüllt. Es kann insbesondere ebenfalls von Vorteil sein, wenn die Feuerwiderstandsfähigkeit nach DIN 4102-2, bzw. EN 13501-2 von einer niedrigeren Feuerwiderstandsklasse, beispielsweise F30 nach DIN 4102-2 oder EI30 nach EN 13501-2 durch die intumeszierende Schicht auf Feuerwiderstandklasse beispielsweise >F60 nach DIN 4102-2, bzw. >EI 60 nach EN 13501-1 verbessert wird.

Es kann vorteilhaft sein, wenn der Schaumstoff offenzellig oder zumindest teilweise offenzellig ist.

Es kann vorteilhaft sein, wenn der Schaumstoff ein Weichschaum ist.

Es kann vorteilhaft sein, wenn der Schaumstoff ein Polyurethanschaumstoff ist.

Es kann vorteilhaft sein, wenn der Schaumstoff rückstellfähig ist.

Es kann vorteilhaft sein, wenn der Schaumstoff nach einer Imprägnierung verzögert rückstellfähig ist.

Für einige Fälle kann es auch vorteilhaft sein, wenn der Schaumstoff nicht imprägniert ist.

Es kann vorteilhaft sein, wenn der Schaumstoff ein retikulierter Polyurethanschaumstoff ist.

Es kann vorteilhaft sein, wenn wenigstens ein Schaumstoff, Schaumstoffabschnitt oder Schaumstoffelement eines Fugendichtungsbandes, wie es Gegenstand der WO 2012/167762 A1 ist, erfindungsgemäß mit dem intumeszierenden Material ausgerüstet ist. Der Offenbarungsgehalt der WO 2012/167762 A1 wird durch ausdrücklichen Verweis als zum Gegenstand der vorliegenden Anmeldung gehörig in diese aufgenommen.

Es kann vorteilhaft sein, wenn wenigstens ein Schaumstoff, Schaumstoffabschnitt oder Schaumstoffelement eines Fugendichtungsbandes, wie es Gegenstand der DE 196 41 415 A1 oder der DE 200 09 674 U1 ist, erfindungsgemäß mit dem intumeszierenden Material ausgerüstet ist. Der Offenbarungsgehalt der DE 196 41 415 A1 und der DE 200 09 674 U1 wird durch ausdrücklichen Verweis als zum Gegenstand der vorliegenden Anmeldung gehörig in diese aufgenommen.

Es kann vorteilhaft sein, wenn wenigstens ein Schaumstoff, Schaumstoffabschnitt oder Zusatz-Schaumstoffmaterial bzw. Schaumstoffstreifen eines Fugendichtungsbandes, wie es Gegenstand der EP 1 811 111 A2 ist, erfindungsgemäß mit dem intumeszierenden Material ausgerüstet ist. Der Offenbarungsgehalt der EP 1 811 111 A2 wird durch ausdrücklichen Verweis als zum Gegenstand der vorliegenden Anmeldung gehörig in diese aufgenommen. Es kann insbesondere von Vorteil sein, wenn wenigstens eine der in EP 1 811 111 A2 genannten Seiten, insbesondere wenigstens Schmalseite, eines Fugendichtungsbandes mit dem intumeszierenden Material beschichtet ist.

Es kann vorteilhaft sein, wenn wenigstens ein Schaumstoff, Schaumstoffabschnitt oder Schaumstoffelement eines profilierten Fugendichtungsbandes, wie es Gegenstand der WO 2009/138311 A1 ist, erfindungsgemäß mit dem intumeszierenden Material ausgerüstet ist. Der Offenbarungsgehalt der WO 2009/138311 A1 wird durch ausdrücklichen Verweis als zum Gegenstand der vorliegenden Anmeldung gehörig in diese aufgenommen.

Es kann vorteilhaft sein, wenn wenigstens ein Schaumstoff, Schaumstoffabschnitt oder Schaumstoffelement eines Fugendichtungsbandes, wie es Gegenstand der EP 2 112 292 A2 ist, erfindungsgemäß mit dem intumeszierenden Material ausgerüstet ist. Der Offenbarungsgehalt der EP 2 112 292 A2 wird durch ausdrücklichen Verweis als zum Gegenstand der vorliegenden Anmeldung gehörig in diese aufgenommen.

Es kann vorteilhaft sein, wenn wenigstens ein Schaumstoff, Schaumstoffabschnitt oder Schaumstoffelement eines Fugendichtungsbandes, wie es Gegenstand der EP 2 784 231 A1 ist, erfindungsgemäß mit dem intumeszierenden Material ausgerüstet ist. Der Offenbarungsgehalt der EP 2 784 231 A2 wird durch ausdrücklichen Verweis als zum Gegenstand der vorliegenden Anmeldung gehörig in diese aufgenommen.

Es kann vorteilhaft sein, wenn wenigstens ein Schaumstoff, Schaumstoffabschnitt oder Schaumstoffelement eines Fugendichtungsbandes, wie es Gegenstand der EP 2 420 631 A2 ist, erfindungsgemäß mit dem intumeszierenden Material ausgerüstet ist. Der Offenbarungsgehalt der EP 2 420 631 A2 wird durch ausdrücklichen Verweis als zum Gegenstand der vorliegenden Anmeldung gehörig in diese aufgenommen. Es kann insbesondere von Vorteil sein, wenn das in der EP 1 811 111 A2 genannte Einlegeteil erfindungsgemäß mit dem intumeszierenden Material ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 354 410 A2 ist, erfindungsgemäß mit dem intumeszierenden Material ausgerüstet ist. Der Offenbarungsgehalt der EP 2 354 410 A2 wird durch ausdrücklichen Verweis als zum Gegenstand der vorliegenden Anmeldung gehörig in diese aufgenommen. Es kann insbesondere von Vorteil sein, wenn wenigstens ein der in der EP 2 354 410 A2 genannten Schaumstoffstreifen erfindungsgemäß mit dem intumeszierenden Material ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 065 548 A2 ist, erfindungsgemäß mit dem intumeszierenden Material ausgerüstet ist. Der Offenbarungsgehalt der EP 2 065 548 A2 wird durch ausdrücklichen Verweis als zum Gegenstand der vorliegenden Anmeldung gehörig in diese aufgenommen. Es kann insbesondere von Vorteil sein, wenn wenigstens ein der in der EP 2 065 548 A2 genannten Schaumstoffstreifen erfindungsgemäß mit dem intumeszierenden Material ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der WO 94/20701 A1 ist, erfindungsgemäß mit dem intumeszierenden Material ausgerüstet ist. Der Offenbarungsgehalt der WO 94/20701 A1 wird durch ausdrücklichen Verweis als zum Gegenstand der vorliegenden Anmeldung gehörig in diese aufgenommen. Es kann insbesondere von Vorteil sein, wenn wenigstens einer der in der WO 94/20701 A1 genannten Schaumstoffabschnitte bildendenden Rand-Längsbereiche erfindungsgemäß mit dem intumeszierenden Material ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 982 821 A1 ist, erfindungsgemäß mit dem intumeszierenden Material ausgerüstet ist. Der Offenbarungsgehalt der EP 2 982 821 A1 wird durch ausdrücklichen Verweis als zum Gegenstand der vorliegenden Anmeldung gehörig in diese aufgenommen. Es kann insbesondere von Vorteil sein, wenn der in der EP 2 982 821 A1 genannte Schaumstoffkörper entsprechend ungleichmäßig erfindungsgemäß mit dem intumeszierenden Material ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 107 176 A1 ist, erfindungsgemäß mit dem intumeszierenden Material ausgerüstet ist. Der Offenbarungsgehalt der EP 2 107 176 A1 wird durch ausdrücklichen Verweis als zum Gegenstand der vorliegenden Anmeldung gehörig in diese aufgenommen. Es kann insbesondere von Vorteil sein, wenn eine in der EP 2 107 176 A1 auf mindestens einer Seitenfläche der Dichtbandrolle vorgesehene Beschichtung erfindungsgemäß mit dem intumeszierenden Material ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 415 942 A1 ist, erfindungsgemäß mit dem intumeszierenden Material ausgerüstet ist. Der Offenbarungsgehalt der EP 2 415 942 A1 wird durch ausdrücklichen Verweis als zum Gegenstand der vorliegenden Anmeldung gehörig in diese aufgenommen. Es kann insbesondere von Vorteil sein, wenn wenigstens einer der in der EP 2 415 942 A1 genannten Schaumstoffstreifen erfindungsgemäß mit dem intumeszierenden Material ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 990 575 A1 ist, erfindungsgemäß mit dem intumeszierenden Material ausgerüstet ist. Der Offenbarungsgehalt der EP 2 990 575 A1 wird durch ausdrücklichen Verweis als zum Gegenstand der vorliegenden Anmeldung gehörig in diese aufgenommen. Es kann insbesondere von Vorteil sein, wenn wenigstens einer der in der EP 2 990 575 A1 genannten Schaumstoffstreifen erfindungsgemäß mit dem intumeszierenden Material ausgerüstet ist.

Der Schaumstoff eines Fugendichtungsbandes kann in mehrere Schaumstoffabschnitte oder Schaumstoffelemente unterteilt sein. Die Unterteilung kann sich beispielsweise durch wenigstens eine im Schaumstoff vorhandene Brandschutzinnenschicht und/oder durch wenigstens eine im Schaumstoff vorhandene feuchtevariable Membranschicht, oder durch ein unterschiedliches Höhenprofil ergeben. Es kann vorteilhaft sein, wenn ein oder mehr als ein Schaumstoffabschnitt oder Schaumstoffelement erfindungsgemäß mit dem intumeszierenden Material ausgerüstet ist.

Es kann vorteilhaft sein, wenn mehrere Dichtbereiche innerhalb eines Fugendichtungsbandes vorgesehen sind.

Es kann vorteilhaft sein, wenn wenigstens zwei Schaumstoffabschnitte unterschiedliche Raumgewichte aufweisen.

Es kann zweckmäßig sein, wenn der Schaumstoff bzw. wenigstens ein oder jeder Schaumstoffabschnitt ein Polyurethan-Schaumstoff, vorzugsweise ein PolyurethanWeichschaumstoff ist. Dieser stellt sich nach einer Vorkomprimierung besonders gut innerhalb der Fuge zurück und sorgt für eine dauerhafte Abdichtung.

Es kann vorteilhaft sein, wenn der Schaumstoff bzw. wenigstens ein oder jeder Schaumstoffabschnitt oder ein oder jedes Schaumstoffelement ein oder mehrere Funktionsbereiche aufweist, vorzugsweise einen ersten nach außen schlagregendichten Bereich, einen zweiten wärmedämmenden sowie schallmindernden Bereich und einen dritten nach innen luftdichten Bereich.

Es kann zweckmäßig sein, wenn das Fugendichtungsband komprimierbar, vorzugsweise vorkomprimiert ist.

Vorteilhaft kann das Fugendichtungsband in Rollenform vorkomprimiert und verzögert rückstellfähig sein.

Vorzugsweise beträgt die Dicke des Fugendichtungsbandes im nicht komprimierten Zustand zwischen 10 mm und 100 mm, vorzugsweise zwischen 18 mm bis 60 mm.

Es kann vorteilhaft sein, wenn das Fugendichtungsband zur Abdichtung von Fugen zwischen zusammengefügten Bauelementen im Hausbau, insbesondere zwischen Wandöffnungen einer Außenwand und Fenster- oder Türrahmen, vorzugsweise ohne Zuhilfenahme zusätzlicher Fugenbändern oder Hinterfüllmaterialien, einsetzbar ist.

Es kann vorteilhaft sein, wenn das Fugendichtungsband zur Abdichtung von Fugen in einem Wärmedämmverbundsystem einsetzbar ist.

Es kann vorteilhaft sein, wenn das Fugendichtungsband zur Abdichtung von Fugen in einem an einer Vorwandmontagezarge einsetzbar ist.

Es kann von Vorteil sein, wenn das Fugendichtungsband einseitig selbstklebend ausgebildet ist. Die Seite kann vollflächig mit einer Selbstklebeschicht oder nicht vollflächig mit einer oder mehr als einer Selbstklebebahn beschichtet sein, welche vorzugsweise mit einem lösbaren Silikonpapier abgedeckt ist.

Weitere vorteilhafte Ausgestaltungen der Erfindung ergeben sich aus der Zeichnung in Zusammenhang mit deren Beschreibung, wobei nachfolgend die Erfindung anhand von Ausführungsbeispielen erläutert wird, die in der Zeichnung dargestellt sind. In dieser zeigen:

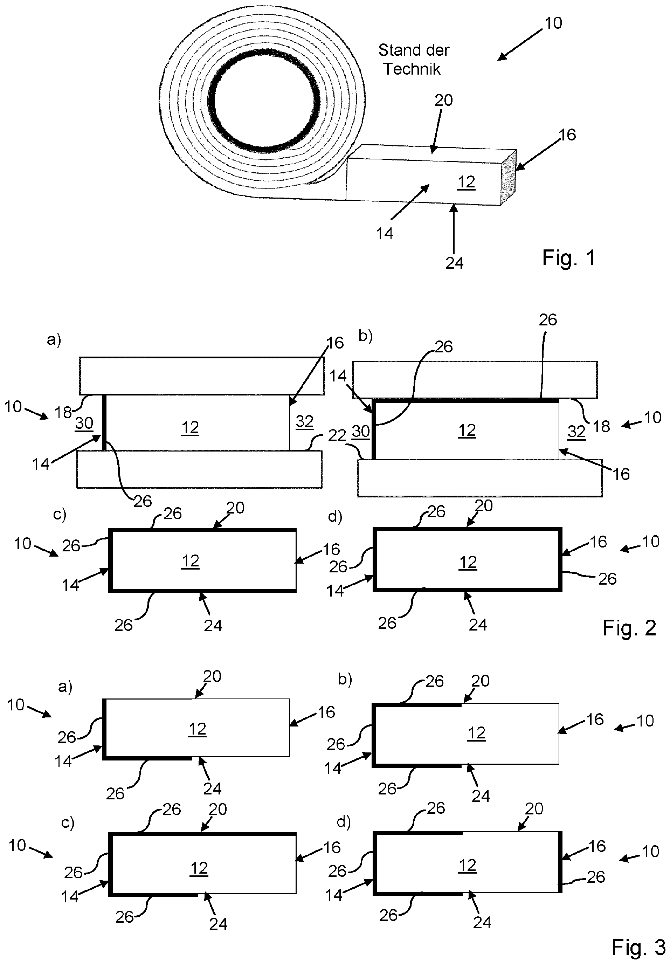

- Fig. 1: eine schematische Darstellung eines in Rollenform vorrätig gehaltenen und vorkomprimierten Fugendichtungsbandes gemäß Stand der Technik in Seitenansicht mit einem bereits abgerollten, zurückgestellten Abschnitt in perspektivischer Ansicht, wobei das Fugendichtungsband einen Schaumstoff aufweist,

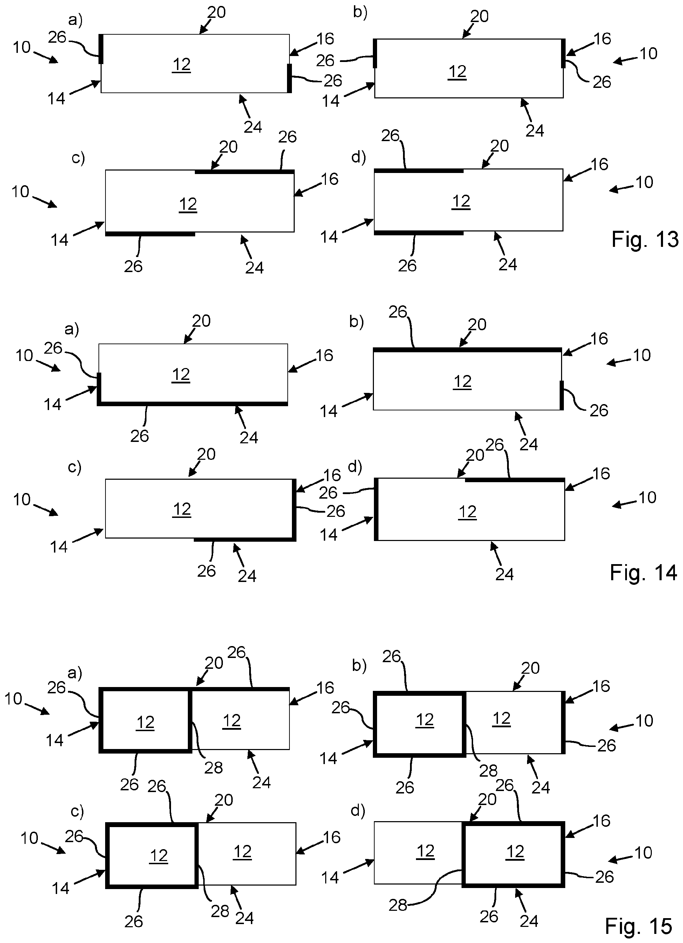

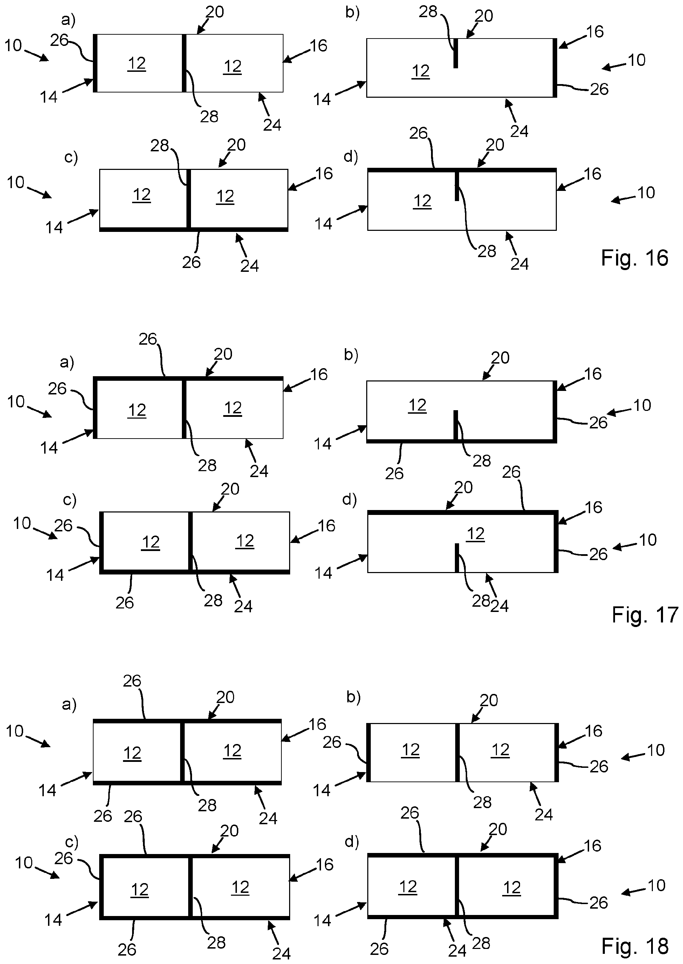

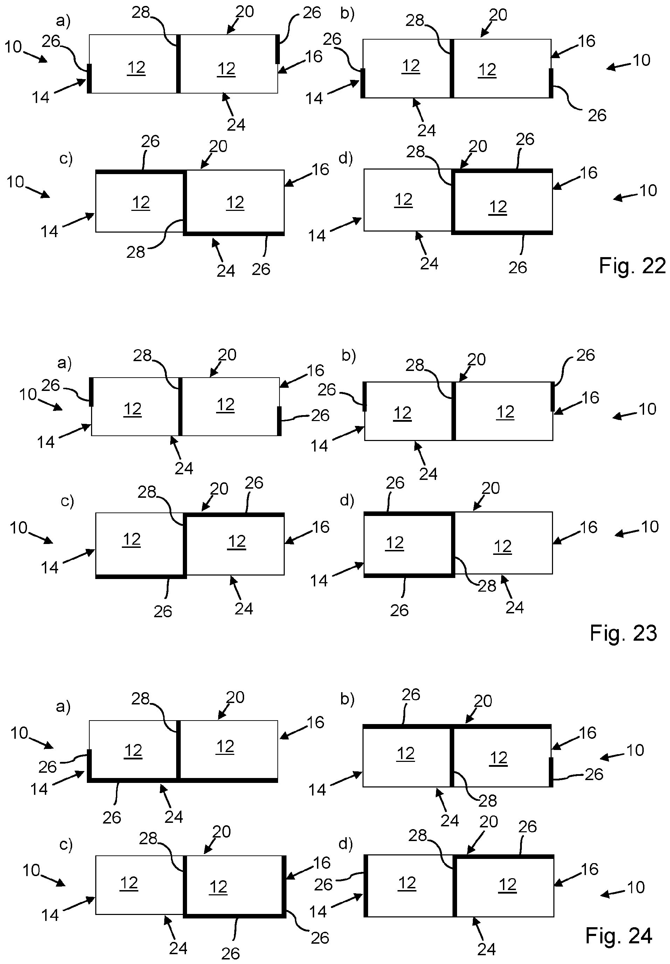

- Fig. 2 - 25: in schematischer Darstellung jeweils vier Varianten a) bis d) eines erfindungsgemäßen Fugendichtungsbandes und

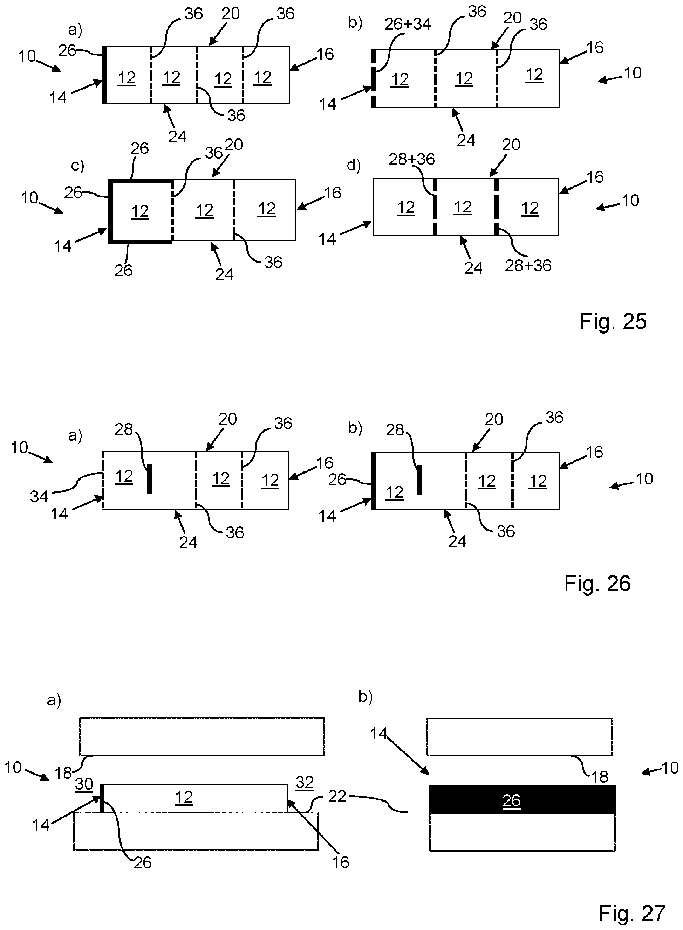

- Fig. 26: in schematischer Darstellung zwei Varianten a) und b) eines erfindungsgemäßen Fugendichtungsbandes,
- Fig. 27: in schematischer Darstellung eine Variante eines zwischen zwei Fugenflanken angeordneten, jedoch noch nicht expandierten erfindungsgemäßen Fugendichtungsbandes a) im Querschnitt und b) mit Blick auf die zum Außenraum weisende und mit einer durchgängigen Brandschutzaußenschicht 26 versehene Längsseite,

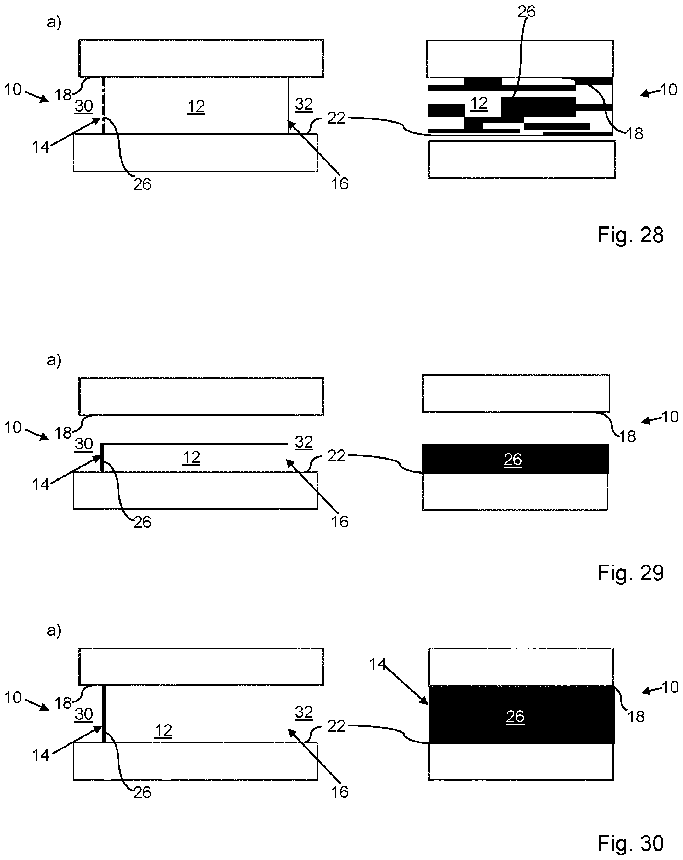

- Fig. 28: in schematischer Darstellung die Variante des in Fig. 28 gezeigten zwischen zwei Fugenflanken angeordneten, jedoch inzwischen expandierten erfindungsgemäßen Fugendichtungsbandes a) im Querschnitt und b) mit Blick auf die zum Außenraum weisende und mit einer mit Lücken ausgebildeten Brandschutzaußenschicht 26 versehene Längsseite,
- Fig. 29: in schematischer Darstellung einer weiteren Variante eines zwischen zwei Fugenflanken angeordneten, jedoch noch nicht expandierten erfindungsgemäßen Fugendichtungsbandes a) im Querschnitt und b) mit Blick auf die zum Außenraum weisende und mit einer durchgängigen Brandschutzaußenschicht versehene Längsseite und
- Fig. 30: in schematischer Darstellung die Variante des in Fig. 29 gezeigten zwischen zwei Fugenflanken angeordneten, jedoch hier expandierten erfindungsgemäßen Fugendichtungsbandes a) im Querschnitt und b) mit Blick auf die zum Außenraum weisende und mit einer durchgehenden Brandschutzaußenschicht 26 versehene Längsseite.

In der Zeichnung sind die für das Verständnis der Erfindung wesentlichen Merkmale dargestellt und erläutert. Werden in den Figuren gleiche Bezugsziffern verwendet, so bezeichnen diese gleiche Teile.

Fig. 1 zeigt eine schematische Darstellung eines in Rollenform vorrätig gehaltenen und vorkomprimierten ersten Fugendichtungsbandes 10 in Seitenansicht mit einem bereits abgerollten, zurückgestellten Abschnitt in perspektivischer Ansicht, wobei das Fugendichtungsband 10 einen Schaumstoff 12 aufweist. Das Fugendichtungsband 10 weist zwei Längsseiten 14, 16 sowie eine im Einbauzustand des Fugendichtungsbandes 10 an die eine Fugenflanke angrenzende Oberseite 20 und eine im Einbauzustand des Fugendichtungsbandes 10 an die gegenüberliegende Fugenflanke angrenzende Unterseite 24 auf. Dieser allgemeine Aufbau des Fugendichtbandes 10 ist Stand der Technik. Die Fugenflanke 18, an welcher die Oberseite 20 des Fugendichtungsbandes 10 anliegt, und die Fugenflanke 22, an welcher die Unterseite 24 des Fugendichtungsbandes 10 anliegt, sind schematisch nur in den in Fig. 2 gezeigten Varianten a) und b) dargestellt und in den übrigen Figuren der besseren Übersicht halber weggelassen. Es versteht sich, dass diese Fugenflanken im Einbauzustand des Fugendichtungsbandes 10 vorhanden sind.

Das erfindungsgemäße Fugendichtungsband 10 umfasst einen Schaumstoff 12 und weist zwei Längsseiten 14, 16 sowie eine im Einbauzustand des Fugendichtungsbandes 10 an die eine Fugenflanke 18 angrenzende Oberseite 20 und eine im Einbauzustand des Fugendichtungsbandes 10 an die gegenüberliegende Fugenflanke 22 angrenzende Unterseite 24 auf, wobei der Schaumstoff 12 über einen vorgegebenen Bereich eine ein intumeszierendes Material aufweisende Brandschutzaußenschicht 26 und/oder über einen vorgegebenen Bereich eine ein intumeszierendes Material aufweisende Brandschutzinnenschicht 28 aufweist und/oder wobei der Schaumstoff 12 ein mit einem intumeszierenden Material geschäumter Schaumstoff 12 ist.

Fig. 2 zeigt ein erfindungsgemäßes Fugendichtungsband 10, bei dem in a) nur die zum Außenraum 30 weisende Längsseite 14 eine Brandschutzaußenschicht 26 aufweist, in b) zusätzlich die an die Fugenflanke 18 anliegende Oberseite 20 eine Brandschutzaußenschicht 26 aufweist, in c) zusätzlich die an die Fugenflanke 22 anliegende Unterseite 24 eine Brandschutzaußenschicht 26 aufweist und in d) zusätzlich die zum Innenraum 32 weisende Längsseite 14 eine Brandschutzaußenschicht 26 aufweist.

Der vorgegebene Bereich der Brandschutzaußenschicht 26 betrifft in allen der in Fig. 2 gezeigten Varianten a) - d) jeweils die komplette Fläche der die jeweilige Brandschutzaußenschicht 26 aufweisenden Seite und somit nicht nur einen Teilbereich der entsprechenden Seite. Gleichwohl muss die vorgesehene Brandschutzaußenschicht 26 nicht - wie in den Fig. 2 - 26 dargestellt - lückenlos sein, sondern kann sich - wie die Brandschutzinnenschicht 28 im Übrigen auch - jeweils aus einer zusammenhängenden Fläche mit oder ohne Lücken und/oder aus mehreren nicht zusammenhängenden Flächen mit oder ohne Lücken zusammensetzen.

Die Varianten a) bis d) des in Fig. 3 dargestellten Fugendichtungsbandes 10 weisen nur Brandschutzaußenschichten 26 auf, wobei die Brandschutzaußenschichten 26 auch eine Teilfläche der Unterseite 24, wie in den Varianten a), c) und d) der Fig. 3 gezeigt, oder eine Teilfläche der Oberseite 20, wie in den Varianten b) und c) der Fig. 3 gezeigt, betreffen. In allen Varianten a) bis d) der Fig. 3 ist die zum Außenraum 30 weisende komplette Fläche der Längsseite 14 mit einer Brandschutzaußenschicht 26 versehen. Zusätzlich ist zum einen in Variante d) der Fig. 3 die zum Innenraum 32 weisende komplette Fläche der Längsseite 16 mit einer Brandschutzaußenschicht 26 versehen und zum anderen in Variante b) der Fig. 3 die zur Fugenflanke18 weisende komplette Fläche der Oberseite 20 mit einer Brandschutzaußenschicht 26 versehen.

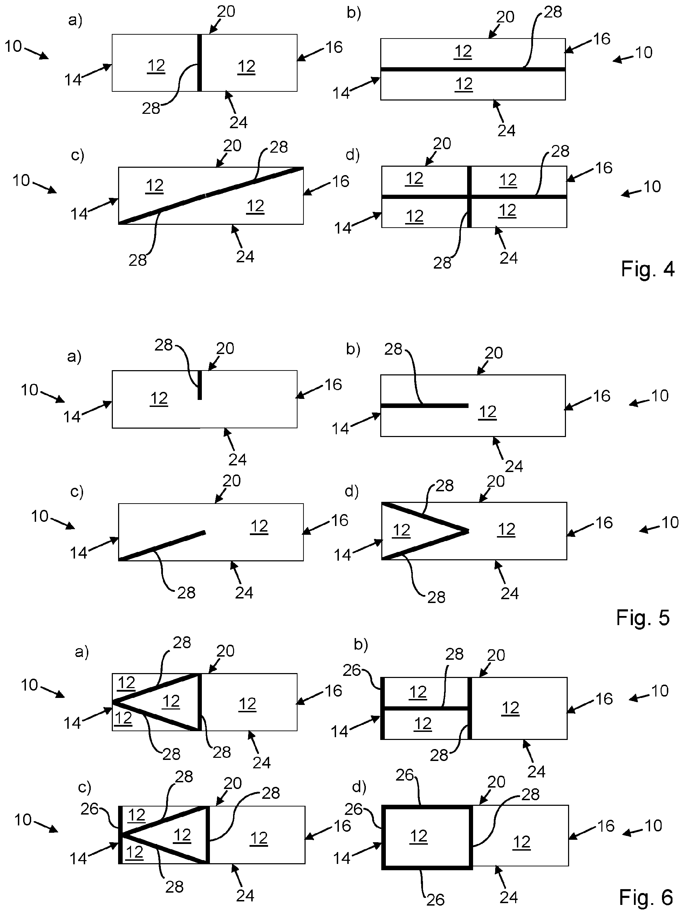

Fig. 4 zeigt in den Varianten a) bis d) jeweils ein erfindungsgemäßen Fugendichtungsband 10, das jeweils, wie in den Varianten a) bis c gezeigt, nur eine Brandschutzinnenschicht 28 aufweist, oder, wie in Variante d) der Fig. 4 gezeigt, zwei sich kreuzende Brandschutzinnenschichten 28 aufweist. Alle Brandschutzinnenschichten 28 verlaufen zentral durch die Mittellängsachse des Fugendichtungsbandes 10, und zwar jeweils zwischen zwei sich gegenüberliegenden Längsseiten 14, 16 und parallel zur Ober- und Unterseite 20, 24, wie in den Varianten b) und d) gezeigt, oder zwischen der Oberseite 20 und der Unterseite 24 und parallel zu den Längsseiten 14, 16, wie in den Varianten a) und d) gezeigt. In Variante c) verläuft die Brandschutzinnenschicht 28 von der sich zwischen der Unterseite 24 und der zum Außenraum 30 weisenden Längsseite 14 erstreckenden Kante zu der sich zwischen der Oberseite 20 und der zum Innenraum 32 weisenden Längsseite 16 erstreckenden Kante. Die Brandschutzinnenschicht 28 verläuft somit quasi diagonal innerhalb des Schaumstoffs 12 des Fugendichtungsbandes 10. Die Brandschutzinnenschichten 28 teilen in den Varianten a) bis c) der Fig. 4 den Schaumstoff 12 in zwei Schaumstoffabschnitte 12 und in Variante d) sogar in vier Schaumstoffabschnitte 12.

Ein weiteres erfindungsgemäßes Fugendichtungsband 10 weist in den in Fig. 5 dargestellten Varianten a) bis d) wiederum nur Brandschutzinnenschichten 28 auf, die allerdings im Gegensatz zu den in Fig. 4 gezeigten Brandschutzinnenschichten 28 quasi wie Einschnitte an der Mittellängsachse des Fugendichtungsbandes 10 enden und somit nicht komplett zwischen den sich gegenüberliegenden Längsseiten 14, 16 oder zwischen Oberseite 20 und der Unterseite 24 oder zwischen diametral sich gegenüberliegenden Kanten verlaufen. Der vorgegebene Bereich der innerhalb des Schaumstoffs 12 verlaufenden Brandschutzinnenschicht 28 ist somit entsprechend kürzer.

Fig. 6 verdeutlicht in den Varianten a) bis d), welche Geometrien aus verschiedenen Kombinationen von Brandschutzaußenschichten 26 mit Brandschutzinnenschichten 28 entstehen können, die je nach Einsatzzweck des Fugendichtungsbandes 10 unterschiedlich vorteilhaft sein können.

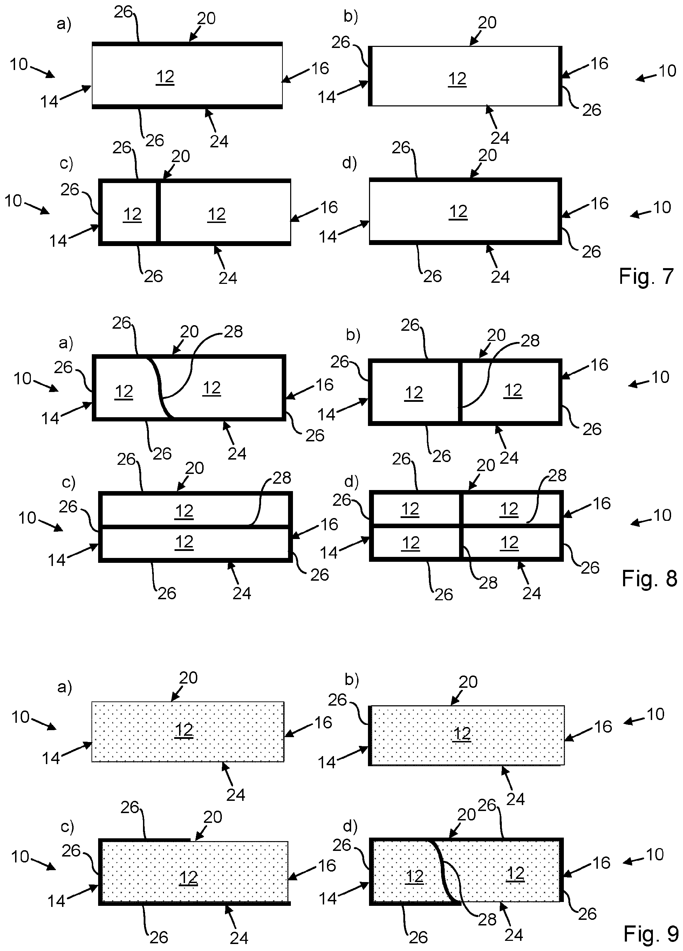

In den Fig. 7 und 8 sind weitere Fugendichtungsbänder 10 dargestellt, die verschiedene Kombinationen von nur Brandschutzaußenschichten 26, aber auch verschiedene Kombinationen von Brandschutzaußenschichten 26 mit Brandschutzinnenschichten 28 zeigen. Hervorzuheben ist beispielhaft Variante a) des in Fig. 8 dargestellten Fugendichtungsbandes 10. Die dort dargestellte Brandschutzinnenschicht 18 verläuft kurvig und dezentral zwischen der Oberseite 20 und der Unterseite 24 des Fugendichtungsbandes 10. Die Brandschutzinnenschicht 18 verläuft somit nicht durch die Mittelängsachse des Fugendichtungsbandes 10. Auch eine solche Geometrie kann abhängig vom Einsatzzweck des Fugendichtungsbandes 10 vorteilhaft sein.

Fig. 9 zeigt in Variante a) ein Fugendichtungsband 10, dessen Schaumstoff 12 ein mit einem intumeszierenden Material geschäumter Schaumstoff 12 ist. Varianten b) bis d) der Fig. 9 zeigen vorteilhafte Kombinationenmöglichkeiten des mit einem intumeszierenden Material geschäumten Schaumstoffs 12 mit Brandschutzaußenschichten 28 und Brandschutzinnenschichten 28.

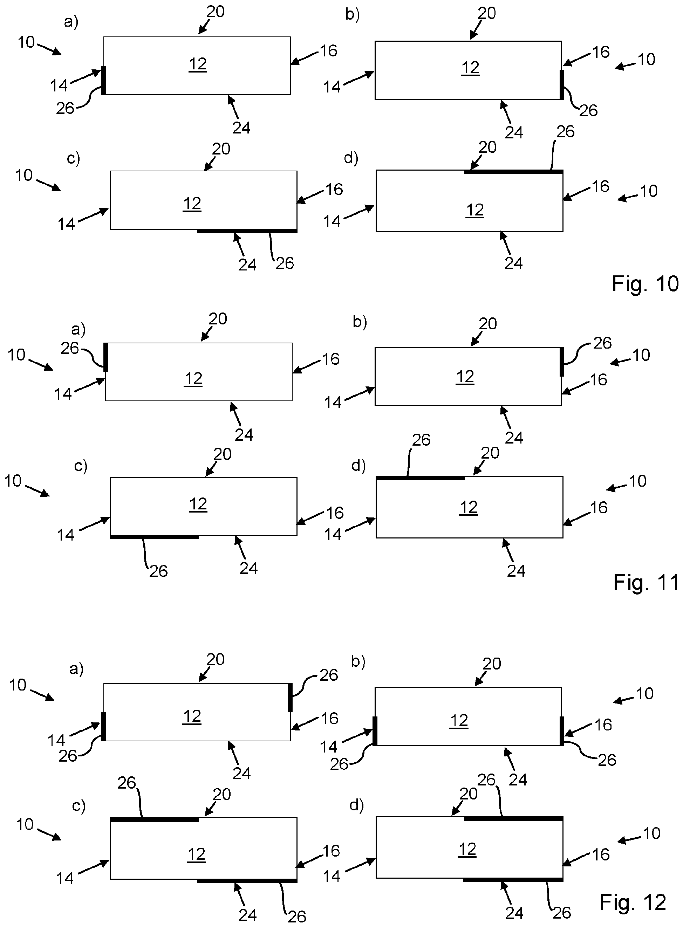

Fig. 10 bis 24 zeigen jeweils weitere aus sich heraus verständliche Varianten a) bis d) eines erfindungsgemäßen Fugendichtungsbandes mit unterschiedlichen je nach Anwendung vorteilhaften Kombinationen von Brandschutzaußenschichten 26 und/oder Brandschutzinnenschichten 28.

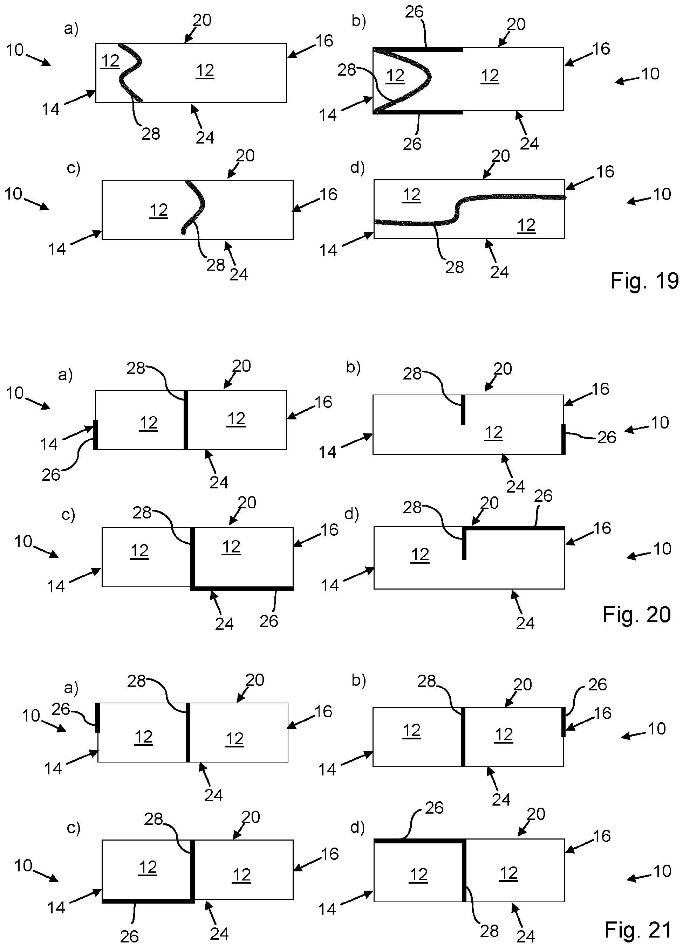

In Fig. 19 zeiget die Variante a) des Fugendichtungsbandes 10 eine Brandschutzinnenschicht 28, die sich kurvig und dezentral zwischen der Oberseite 20 und Unterseite 24 innerhalb des Schaumstoffs 12 erstreckt. Die Variante d) des in Fig. 19 dargestellten Fugendichtungsbandes 10 zeigt eine Brandschutzinnenschicht 28, die sich kurvig und relativ zentral zwischen den Längsseiten 14, 16 innerhalb des Schaumstoffs 12 erstreckt. Variante b) der Fig. 9 ist eine Kombination aus zwei auf der Oberseite 20 und der Unterseite 20 angeordneten Brandschutzaußenschichten 26 mit einer kurvig innerhalb des Schaumstoffs 12 verlaufenden Brandschutzinnenschicht 28, wobei die Brandschutzaußenschichten 26 in die Brandschutzinnenschicht 28 übergeht. Die Anordnung der vorgenannten Brandschutzschichten 26, 28 ist in einem Bereich des Fugendichtungsbandes 10, welcher dem Außenraum 30 näher liegt als dem Innenraum 32.

Die in den Fig. 25 und 26 dargestellten Varianten eines erfindungsgemäßen Fugendichtungsbandes 10 weisen über einen vorgegebenen Bereich des Schaumstoffs 12 mehrere feuchtevariable Membraninnenschichten 36 auf, die quer zu einer Wasserdampfdiffusionsrichtung angeordnet ist. In den Varianten a) bis c) der Fig. 25 sowie den Varianten a) und b) der Fig. 26 handelt es sich um feuchtevariable Membraninnenschichten 36, wie sie aus dem Stand der Technik bekannt sind. Diese sind erfindungsgemäß mit wenigstens einer Brandschutzaußenschicht 26, wie in Variante a) und c) der Fig. 25 sowie Variante b) der Fig. 26 gezeigt, und/oder mit wenigstens einer Brandschutzinnenschicht 28, wie in den Varianten a) und b) der Fig. 26 gezeigt, kombiniert. Zudem ist, wie in Variante a) der Fig. 26 gezeigt, vorteilhaft auch eine zusätzliche Kombination einer feuchtevariablen Membranaußenschicht 34 möglich.

Es kann in Ausnahmefällen auch vorteilhaft sein, wenn die Brandschutzaußenschicht 26 derart beschaffen ist, dass diese auch die feuchtevariable Membranaußenschicht 34 bildet, wie in Variante b) der Fig. 26 dargestellt, oder dass die Brandschutzinnenschicht 28 derart beschaffen ist, dass diese auch die feuchtevariable Membraninnenschicht 36 bildet, wie in Variante d) der Fig. 25 dargestellt.

Fig. 27 und 28 zeigen ein weiteres Ausführungsbeispiel. Fig. 27 zeigt in schematischer Darstellung ein zwischen zwei Fugenflanken 18, 22 angeordnetes, jedoch noch nicht expandiertes erfindungsgemäßes Fugendichtungsband 10 a) im Querschnitt und b) mit Blick auf die zum Außenraum 30 weisende und mit einer durchgängigen Brandschutzaußenschicht 26 versehene Längsseite 14. Fig. 28 zeigt in schematischer Darstellung das gleiche zwischen den Fugenflanken 18, 22 angeordnete, jedoch inzwischen expandierte erfindungsgemäße Fugendichtungsband 10 a) im Querschnitt und b) mit Blick auf die zum Außenraum 30 weisende und mit einer mit Lücken ausgebildeten Brandschutzaußenschicht 26 versehenen Längsseite 14. In Fig. 27 ist also die Brandschutzaußenschicht 26 als durchgehende, also keine Lücken aufweisende Brandschutzaußenschicht 26 vollständig auf der Längsseite 14 des komprimierten Fugendichtungsbandes aufgebracht, und zwar derart, dass diese Brandschutzaußenschicht 26 beim bzw. nach dem Expandieren des Fugendichtungsbandes 10 zwischen den Fugenflanken 18, 22 aufbricht, so dass sich in der zuvor lückenlos zusammenhängenden Fläche der Brandschutzaußenschicht 26 (Fig. 27) schließlich im Einbauzustand des expandierten Fugendichtungsbandes 10 Lücken (Fig. 28) gebildet haben.

Fig. 29 und 30 zeigen ein weiteres Ausführungsbeispiel. Fig. 29 zeigt in schematischer Darstellung ein zwischen zwei Fugenflanken 18, 22 angeordnetes, jedoch noch nicht expandiertes erfindungsgemäßes Fugendichtungsband 10 a) im Querschnitt und b) mit Blick auf die zum Außenraum 30 weisende und mit einer durchgängigen Brandschutzaußenschicht 26 versehene Längsseite 14. Fig. 30 zeigt in schematischer Darstellung das gleiche zwischen den Fugenflanken 18, 22 angeordnete, jedoch inzwischen expandierte erfindungsgemäße Fugendichtungsband 10 a) im Querschnitt und b) mit Blick auf die zum Außenraum 30 weisende und weiterhin mit einer durchgängigen Brandschutzaußenschicht 26 versehenen Längsseite 14. In Fig. 29 ist also die Brandschutzaußenschicht 26 als durchgehende, also keine Lücken aufweisende Brandschutzaußenschicht 26 vollständig auf der Längsseite 14 des komprimierten Fugendichtungsbandes aufgebracht, und zwar derart, dass diese Brandschutzaußenschicht 26 beim bzw. nach dem Expandieren des Fugendichtungsbandes 10 zwischen den Fugenflanken 18, 22 weiterhin als durchgehende, also keine Lücken aufweisende Brandschutzaußenschicht 26 vollständig auf der Längsseite 14 des komprimierten Fugendichtungsbandes 10 verbleibt. Die zuvor lückenlos zusammenhängende Fläche der Brandschutzaußenschicht 26 (Fig. 29) bleibt im Einbauzustand des expandierten Fugendichtungsbandes 10 (Fig. 30) erhalten.

Fig. 29 in schematischer Darstellung einer weiteren Variante eines zwischen zwei Fugenflanken angeordneten, jedoch noch nicht expandierten erfindungsgemäßen Fugendichtungsbandes a) im Querschnitt und b) mit Blick auf die zum Außenraum weisende und mit einer durchgängigen Brandschutzaußenschicht versehene Längsseite und

Fig. 30 in schematischer Darstellung die Variante des in Fig. 29 gezeigten zwischen zwei Fugenflanken angeordneten, jedoch hier expandierten erfindungsgemäßen Fugendichtungsbandes a) im Querschnitt und b) mit Blick auf die zum Außenraum weisende und mit einer durchgehenden Brandschutzaußenschicht 26 versehene Längsseite,

### Bezugszeichenliste

- 10: Fugendichtungsband
- 12: Schaumstoff
- 14: Längsseite
- 16: Längsseite
- 18: Fugenflanke
- 20: Oberseite
- 22: Fugenflanke
- 24: Unterseite
- 26: Brandschutzaußenschicht
- 28: Brandschutzinnenschicht
- 30: Außenraum
- 32: Innenraum
- 34: Membranaußenschicht
- 36: Membraninnenschicht

## Patentansprüche

1. Fugendichtungsband (10) umfassend einen Schaumstoff (12) mit zwei Längsseiten (14, 16) sowie eine im Einbauzustand des Fugendichtungsbandes (10) an die eine Fugenflanke (18) angrenzende Oberseite (20) und eine im Einbauzustand des Fugendichtungsbandes (10) an die gegenüberliegende Fugenflanke (22) angrenzende Unterseite (24), **dadurch gekennzeichnet, dass** der Schaumstoff (12) über einen vorgegebenen Bereich eine ein intumeszierendes Material aufweisende Brandschutzaußenschicht (26) und/oder über einen vorgegebenen Bereich eine ein intumeszierendes Material aufweisende Brandschutzinnenschicht (28) aufweist und/oder dass der Schaumstoff (12) ein mit einem intumeszierenden Material geschäumter Schaumstoff (12) ist.

2. Fugendichtungsband (10) nach Anspruch 1, **dadurch gekennzeichnet, dass** die Brandschutzaußenschicht (26) auf der im Einbauzustand des Fugendichtungsbandes (10) zum Außenraum (30) weisenden Längsseite (14) des Schaumstoffs (12) und/oder auf der im Einbauzustand des Fugendichtungsbandes (10) zum Innenraum (32) weisenden Längsseite (16) des Schaumstoffs (12) und/oder auf der Oberseite (20) des Schaumstoffs (12) und/oder auf der Unterseite (24) des Schaumstoffs (12) angeordnet ist.

3. Fugendichtungsband (10) nach zumindest einem der vorherigen Ansprüche, **dadurch gekennzeichnet, dass** sich wenigstens eine Brandschutzinnenschicht (28) parallel zu den Längsseiten (14, 16) innerhalb des Schaumstoffs (12) erstreckt und/oder dass sich wenigstens eine Brandschutzinnenschicht (28) parallel zur Ober- (20) und Unterseite (24) innerhalb des Schaumstoffs (12) erstreckt und/oder dass sich wenigstens eine Brandschutzinnenschicht (28) schräg zwischen Ober- (20) und Unterseite (24) innerhalb des Schaumstoffs (12) erstreckt und/oder dass sich wenigstens eine Brandschutzinnenschicht (28) schräg zwischen den Längsseiten (14, 16) innerhalb des Schaumstoffs (12) erstreckt.

4. Fugendichtungsband (10) nach zumindest einem der vorherigen Ansprüche, **dadurch gekennzeichnet, dass** wenigstens eine Brandschutzinnenschicht (28) zentral innerhalb des Schaumstoffs (12) angeordnet ist und/oder dass wenigstens eine Brandschutzinnenschicht (28) dezentral innerhalb des Schaumstoffs (12) angeordnet ist.

5. Fugendichtungsband (10) nach zumindest einem der vorherigen Ansprüche, **dadurch gekennzeichnet, dass** sich wenigstens eine Brandschutzinnenschicht (28) kurvig zwischen Ober- (20) und Unterseite (24) innerhalb des Schaumstoffs (12) erstreckt und/oder dass sich wenigstens eine Brandschutzinnenschicht (28) kurvig zwischen den Längsseiten (14, 16) innerhalb des Schaumstoffs (12) erstreckt.

6. Fugendichtungsband (10) nach zumindest einem der vorherigen Ansprüche, **dadurch gekennzeichnet, dass** die Brandschutzaußenschicht (26) und/oder die Brandschutzinnenschicht (28) eine Folie ist, in welcher das intumeszierende Material integriert ist, wobei die Folie vorzugsweise ein- oder beidseitig haftend ausgerüstet ist.

7. Fugendichtungsband (10) nach zumindest einem der vorherigen Ansprüche, **dadurch gekennzeichnet, dass** die das intumeszierende Material aufweisende Brandschutzaußenschicht (26) und/oder die das intumeszierende Material aufweisende Brandschutzinnenschicht (28) ein Bindemittel enthält.

8. Fugendichtungsband (10) nach zumindest einem der vorherigen Ansprüche, **dadurch gekennzeichnet, dass** als intumeszierendes Material Blähgraphit einsetzbar ist.

9. Fugendichtungsband (10) nach zumindest einem der vorherigen Ansprüche, **dadurch gekennzeichnet, dass** der Blähgraphit eine Expansionstemperatur von > 140 °C, bevorzugt von > 180 °C, besonders bevorzugt zwischen > 180 °C und < 220 °C aufweist.

10. Fugendichtungsband (10) nach zumindest einem der vorherigen Ansprüche, **dadurch gekennzeichnet, dass** der Blähgraphit ein Ausdehnungsvolumen bei bevorzugt 1000°C von > 50 cm³/g, vorzugsweise von > 100 cm³/g, besonders bevorzugt von > 200 cm³/g aufweist.

11. Fugendichtungsband (10) nach zumindest einem der vorherigen Ansprüche, **dadurch gekennzeichnet, dass** der Blähgraphit aus einer der folgenden Blähgraphitsorten oder aus einer Mischung von mehreren, vorzugsweise von zwei der folgenden Blähgraphitsorten besteht, nämlich
a) eine Blähgraphitsorte, bei der mindestens 50%, vorzugsweise mindestens 75% oder mindestens 90% der Partikel eine Partikelgröße von > 180 µm haben oder
b) eine Blähgraphitsorte, bei der mindestens 50%, vorzugsweise mindestens 75% oder mindestens 80 % der Partikel eine Partikelgröße von < 180 µm haben oder
c) eine Blähgraphitsorte, bei der mindestens 50%, vorzugsweise mindestens 75% oder mindestens 80 % der Partikel eine Partikelgröße von < 150 µm haben oder
d) eine Blähgraphitsorte, bei der mindestens 50%, vorzugsweise mindestens 75% oder mindestens 80 % der Partikel eine Partikelgröße von < 75 µm haben oder
e) eine Blähgraphitsorte, bei der mindestens 50%, vorzugsweise mindestens 70% oder mindestens 80 % der Partikel eine Partikelgröße von > 300 µm haben oder
f) eine Blähgraphitsorte, bei der mindestens 50%, vorzugsweise mindestens 70% oder mindestens 80 % der Partikel eine Partikelgröße von > 500 µm haben.

12. Fugendichtungsband (10) nach zumindest einem der vorherigen Ansprüche, **dadurch gekennzeichnet, dass** der Blähgraphit aus einer Mischung von mindestens zwei der folgenden Blähgraphitsorten besteht, nämlich
a) einer Blähgraphitsorte, bei der mindestens 50%, vorzugsweise mindestens 60% der Partikel eine Partikelgröße von > 180 µm haben oder
b) einer Blähgraphitsorte, bei der mindestens 50%, vorzugsweise mindestens 60% der Partikel eine Partikelgröße < 150 µm haben oder
c) einer Blähgraphitsorte, bei der mindestens 50%, vorzugsweise mindestens 60% der Partikel eine Partikelgröße von > 300 µm haben.

13. Fugendichtungsband (10) nach zumindest einem der vorherigen Ansprüche, **dadurch gekennzeichnet, dass** wenigstens eine Brandschutzaußenschicht (26) in wenigstens eine Brandschutzinnenschicht (28) übergeht.

14. Fugendichtungsband (10) nach zumindest einem der vorherigen Ansprüche, **dadurch gekennzeichnet, dass** die Brandschutzaußenschicht (26) und/oder die Brandschutzinnenschicht (28) sich jeweils aus einer zusammenhängenden Fläche mit oder ohne Lücken und/oder aus mehreren nicht zusammenhängenden Flächen mit oder ohne Lücken zusammensetzt.

15. Fugendichtungsband (10) nach zumindest einem der vorherigen Ansprüche, **dadurch gekennzeichnet, dass** die Brandschutzaußenschicht (26) als durchgehende, also keine Lücken aufweisende Brandschutzaußenschicht (26) teilweise oder vorzugsweise vollständig auf zumindest einer Längsseite des vorab komprimierten und vorzugsweise vorab zu einer Rolle aufgewickelten Fugendichtungsbandes (10) aufgebracht ist, derart, dass diese Brandschutzaußenschicht (26) beim Expandieren des Fugendichtungsbandes (10) in einer Fuge, also im Einbauzustand des Fugendichtungsbandes (10), aufbricht, so dass sich in der zuvor lückenlos zusammenhängenden Fläche der Brandschutzaußenschicht (26) Lücken bilden.

16. Fugendichtungsband (10) nach Anspruch 14, **dadurch gekennzeichnet, dass** der Anteil an Lücken an der mit einer Brandschutzaußenschicht (26) versehenen Fläche insgesamt nach teilweiser oder vollständiger Expansion des Fugendichtungsbandes (10) 10 bis 90 %, vorzugsweise 70 bis 80% beträgt.

17. Fugendichtungsband (10) nach zumindest einem der vorherigen Ansprüche, **dadurch gekennzeichnet, dass** der Schaumstoff (12) über einen vorgegebenen Bereich wenigstens eine feuchtvariable Membranaußenschicht (34) und/oder über einen vorgegebenen Bereich wenigstens eine feuchtevariable Membraninnenschicht (36) aufweist, wobei die Membranaußenschicht (34) und/oder die Membraninnenschicht (36) zumindest teilweise quer zu einer Wasserdampfdiffusionsrichtung angeordnet ist.

18. Fugendichtungsband (10) nach zumindest einem der vorherigen Ansprüche, **dadurch gekennzeichnet, dass** der Schaumstoff (12) mit einer Imprägniermasse imprägniert ist, wobei die Imprägniermasse vorzugsweise ein intumeszierendes Material enthält.

19. Verfahren zur Herstellung eines Fugendichtungsbandes, das einen Schaumstoff mit zwei Längsseiten sowie eine im Einbauzustand des Fugendichtungsbandes an die eine Fugenflanke angrenzende Oberseite und eine im Einbauzustand des Fugendichtungsbandes an die gegenüberliegende Fugenflanke angrenzende Unterseite umfasst, wobei der Schaumstoff über einen vorgegebenen Bereich mit einer ein intumeszierendes Material aufweisenden Brandschutzaußenschicht beschichtet wird, indem eine Paste, die ein Bindemittel und das intumeszierende Material, vorzugsweise Blähgraphit, enthält, wenigstens bereichsweise auf die eine und/oder andere Längsseite und/oder Oberseite und/oder Unterseite des nicht komprimierten oder des komprimierten Schaumstoffs aufgetragen und anschließend getrocknet wird.
